# DEMANDE DE BREVET EUROPEEN

(11) **EP 0 734 896 A1**
(43) Date de publication de la demande: **02.10.1996**
(21) Numéro de dépôt: 96400683.7
(22) Date de dépôt: 29.03.1996
(51) Int. Cl.: B60J 10/04, B60J 10/06

(54) **Joint d'étanchéité pour vitre coulissante de véhicule**

(30) Priorité: 29.03.1995 FR 9503681
(71) Demandeur: STANDARD PRODUCTS INDUSTRIEL, F-95871 Bezons (FR)
(72) Inventeur: Piednoel, René M., 78800 Houilles (FR); Phan, Xuan Mai, 95130 Franconville (FR)
(74) Mandataire: Busnel, Jean-Benoît

(57) **Abrégé**

La présente invention concerne un joint d'étanchéité pour vitre coulissante (V) de véhicule constitué notamment d'un profilé comprenant une partie interne (1) pourvue d'un élément (11) de section en U pour la fixation sur la feuillure (F) de carrosserie et d'une partie externe (2) pourvue d'un élément d'étanchéité (22) destiné à être au contact de la face extérieure de la vitre (V).

Selon l'invention, lesdites parties interne (1) et externe (2) sont réunies par un bras de liaison articulé (3) dont les tronçons rigides de rattachement (31,32) définissent avec l'élément de fixation (11) et l'élément d'étanchéité (22) des logements d'ancrage (41,42) adaptés aux extrémités d'une armature externe amovible (5) de section en U.

## Description

La présente invention concerne un joint d'étanchéité pour vitre coulissante de véhicule.

Les joints traditionnellement utilisés dans une telle application sont constitués notamment d'un profilé comprenant une partie interne pourvue d'un élément de section en U pour la fixation sur la feuillure de carrosserie et d'une partie externe pourvue d'un élément d'étanchéité au contact de la face extérieure de la vitre.

Cependant, dans un joint de ce type, l'élément d'étanchéité possède une surface glissante ou "flock" qui est réalisée par revêtement, des zones de contact avec la vitre. Dans les zones angulaires situées entre les tronçons supérieur et verticaux de coulisse de vitre, on réalise un moulage de jonction qui doit être revêtu de "flock".

Or, ces opérations de revêtement sont rendues difficiles du fait du peu d'espace existant entre la partie externe et la partie interne.

Cette difficulté est accrue lorsque la partie interne est également pourvue d'une lèvre assurant l'étanchéité du côté intérieur de la vitre.

L'invention a pour but de résoudre ces problèmes techniques de manière satisfaisante.

Ce but est atteint au moyen d'un joint d'étanchéité pour vitre coulissante de véhicule constitué notamment d'un profilé comprenant une partie interne pourvue d'un élément de section en U pour la fixation sur la feuillure de carrosserie et d'une partie externe pourvue d'un élément d'étanchéité destiné à être au contact de la face extérieure de la vitre, caractérisé en ce que lesdites parties interne et externe sont réunies par un bras de liaison articulé dont les tronçons rigides de rattachement définissent respectivement avec l'élément de fixation et l'élément d'étanchéité des logements d'ancrage adaptés aux extrémités d'une armature externe amovible de section en U.

Selon une caractéristique avantageuse, ladite armature externe amovible comporte une dent obturant partiellement une gorge dans laquelle est verrouillée sous tension l'extrémité interne de la partie externe de façon à emprisonner ladite armature et à refermer le bras de liaison autour du bord périphérique de la vitre.

Selon une variante éventuellement complémentaire, la liaison entre l'extrémité interne (21) de la partie externe (2) et l'armature (5) est renforcée au moyen d'une bande à double face adhésive.

Selon une autre caractéristique, ladite armature externe amovible comporte une potence d'accrochage sur l'élément de fixation en U.

Selon encore une autre caractéristique, l'articulation dudit bras de liaison est constituée d'un segment élastiquement déformable, réalisé à la jonction entre les tronçons rigides de rattachement.

Une première variante consiste à prévoir que le tronçon de rattachement du bras de liaison avec la partie interne est constitué d'une portion sensiblement parallèle à la branche extérieure de l'élément de fixation en U se prolongeant vers l'articulation par un coude d'environ 90° puis par une portion rectiligne.

Par ailleurs, il est prévu que le tronçon de rattachement avec la partie externe est constitué d'une portion rectiligne.

En outre, ledit tronçon de rattachement du bras de liaison avec la partie externe se raccorde à la base d'une lèvre d'étanchéité venant en contact de glissement avec la face extérieure de la vitre.

Selon une autre variante, le tronçon de rattachement du bras de liaison avec la partie interne comporte sur sa face intérieure au logement correspondant des saignées longitudinales destinées à recevoir des crans ménagés sur l'armature externe.

De façon à garantir un positionnement correct de la vitre mobile, il est prévu quele bras de liaison comporte des bossages de calage et de guidage du bord périphérique de la vitre.

Pour parfaire la stabilité du joint et l'étanchéité, l'extrémité interne de la partie externe est pourvue d'au moins une lèvre d'appui sur la feuillure.

Selon encore une autre variante, la partie interne porte, sous le tronçon de rattachement du bras de liaison, une lèvre d'étanchéité en contact de glissement avec la face intérieure de la vitre.

Le joint de l'invention permet d'effectuer aisément les opérations de revêtement des lèvres d'étanchéité en autorisant un débattement important de la partie externe par retrait de l'armature.

En outre, le montage du joint sur la feuillure de carrosserie est simplifié du fait que l'introduction du bord périphérique de la vitre entre les parties interne et externe est rendue plus facile.

Le joint de l'invention s'applique plus particulièrement à une coulisse latérale de vitre mobile éventuellement équipée de patins de guidage.

L'invention sera mieux comprise à la lecture de la description qui va suivre, accompagnée des dessins sur lesquels :
- la figure 1 représente une vue en coupe transversale du joint de l'invention avant mise en place de l'armature ;
- la figure 2 représente une vue en coupe transversale de l'armature amovible de l'invention ;
- la figure 3 représente une vue en coupe transversale d'un mode de réalisation d'une coulisse latérale de vitre mobile selon l'invention, après mise en place de l'armature ; et
- la figure 4 représente une vue en coupe transversale d'un autre mode de réalisation de la coulisse de l'invention.

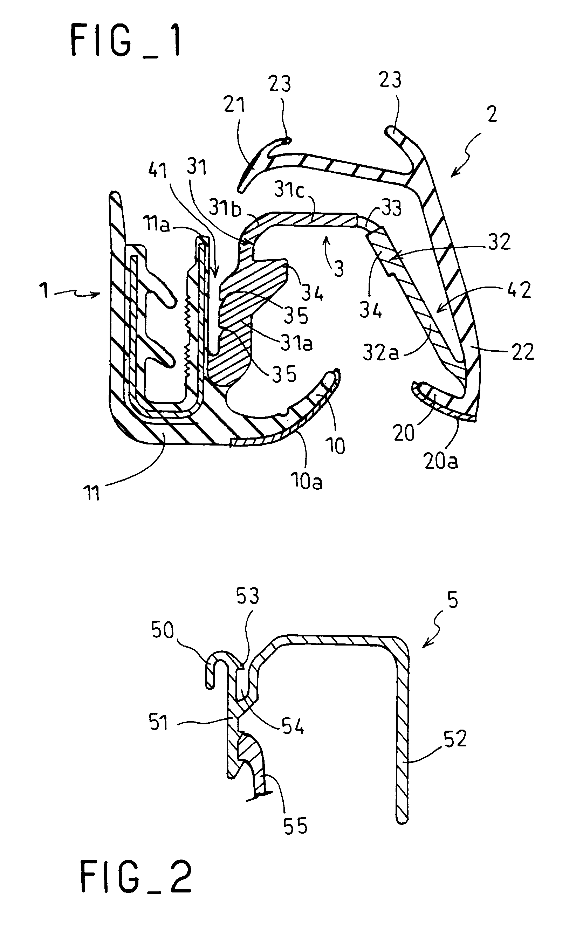

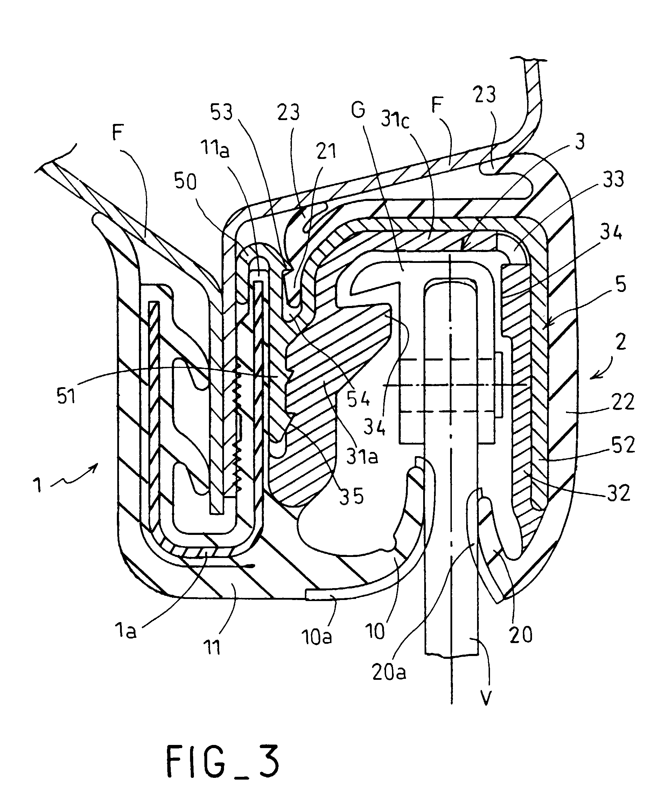

Le joint représenté sur la figure 1 est constitué d'un profilé élastomère qui comprend d'une part, une partie interne 1 pourvue d'un élément 11 de section transversale en U destiné à la fixation sur une feuillure de carrosserie et, d'autre part, une partie externe 2 pourvue d'un élément d'étanchéité 22. L'élément 22 comprend au moins une lèvre 20 destinée à être en contact d'appui et de glissement contre la face extérieure d'une vitre mobile V (représentée sur la figure 3).

La partie interne 1 comporte une armature interne 1a et, le cas échéant, une lèvre d'étanchéité 10 destinée à être en contact d'appui et de glissement avec la face intérieure de la vitre mobile V.

Les lèvres 10,20 sont revêtues d'un matériau glissant 10a,20a.

Les parties interne 1 et externe 2 sont réunies par un bras de liaison 3 articulé.

Le bras de liaison 3 comporte des tronçons de rattachement 31,32 respectivement avec la partie interne 1 et la partie externe 2 qui sont réalisés avec un matériau élastomère rigide ou rigidifié par une armature interne (non représentée).

Le bras de liaison 3 définit d'une part avec l'élément de fixation 11 et d'autre part avec l'élément d'étanchéité 22 des logements d'ancrage 41,42 adaptés aux extrémités d'une armature externe amovible 5.

L'articulation 33 du bras de liaison 3 est constituée d'un segment élastiquement déformable (principalement en flexion) réalisé à la jonction entre les tronçons rigides 31,32 de rattachement.

Le tronçon 31 de rattachement du bras de liaison 3 avec la partie interne 1 et plus précisément avec l'élément de fixation 11 est constitué d'une portion 31a sensiblement parallèle à la branche extérieure 11a de l'élément de fixation 11.

La portion 31a se prolonge vers l'articulation 33 par un coude 31b d'environ 90° puis par une portion rectiligne 31c.

Le tronçon 32 de rattachement avec la partie externe 32 est constitué d'une seule portion rectiligne 32a se raccordant à l'élément d'étanchéité 22 au niveau de la base de la lèvre 20.

L'armature 5 représentée sur la figure 2 est amovible et a une section transversale sensiblement en U formée notamment d'une branche interne 51 et d'une branche externe 52 destinées à être introduites respectivement dans les logements 41,42 du profilé.

L'armature 5 comporte une potence 50 d'accrochage sur la partie interne 1 et, plus précisément sur la branche externe 11a de l'élément de fixation 11.

L'armature 5 comporte en outre une dent 53 obturant partiellement une gorge 54 réalisée sur la branche interne 51.

La gorge 54 et la dent 53 sont destinées à verrouiller sous tension l'extrémité interne 21 de la partie externe 2 comme représenté sur la figure 3.

Sur la figure 3, l'armature est emprisonnée entre le bras de liaison 3, l'élément de fixation 11 et la partie externe 2 en étant d'une part, ancrée par les extrémités de ses branches 51,52 dans les logements 41,42 et accrochée d'autre part sur l'élément de fixation 11 par sa potence 50.

Pour renforcer la fixation de l'armature 5, le tronçon de rattachement 31 du bras de liaison 3 comporte sur la face intérieure au logement 41 de la portion 31a, des saignées longitudinales 35 destinées à recevoir des crans 55 correspondants ménagés sur la branche interne 51 de l'armature 5.

Par ailleurs, pour renfermer le bras de liaison articulé 3 et la partie externe 2 avec l'élément d'étanchéité 22 autour du bord périphérique de la vitre V, il est prévu que l'extrémité interne 21 de la partie externe 2 soit verrouillée sous tension dans la gorge 54 par la dent 53. Cela est rendu possible du fait que la matière élastomère constituant la partie externe 2 est plus molle et plus souple que la matière rigide constitutive de l'armature 5.

La partie externe 2 porte au moins une lèvre 23 en appui sur la feuillure F et de préférence deux lèvres 23 dont l'une est portée par l'extrémité interne 21.

Ces lèvres 23 participent à l'étanchéité de l'habitacle mais aussi au verrouillage sous tension de la partie externe 2 en repoussant l'extrémité interne 21 contre l'armature 5.

Le bras de liaison 3 et plus précisément les tronçons de rattachement 31,32 comportent des bossages 34 de calage et de guidage du patin G solidaire du bord périphérique de la vitre V.

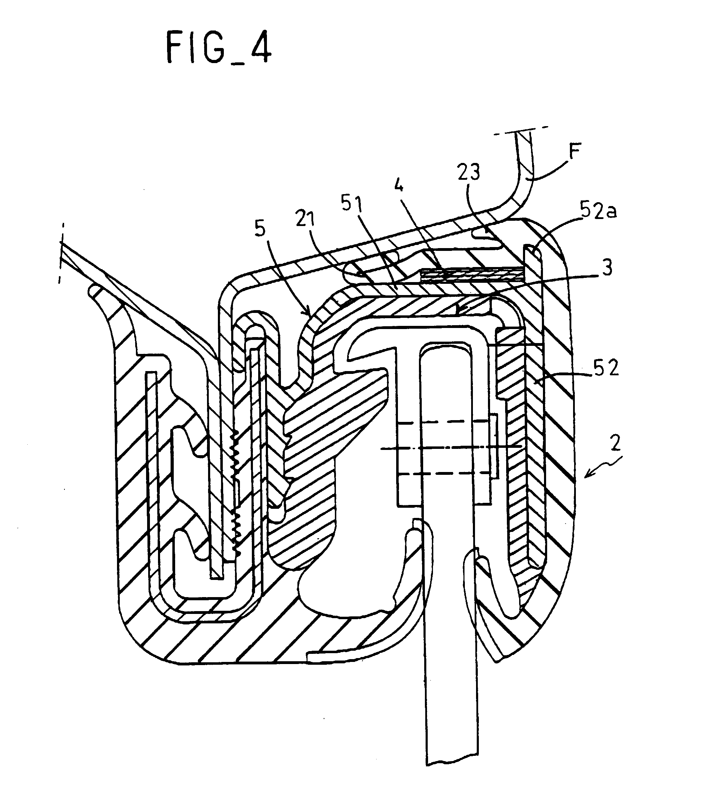

Sur la figure 4, l'extrémité interne 21 de la partie externe 2 est plus courte que dans le mode de réalisation de la figure 3.

La liaison entre l'armature 5 et l'extrémité interne 21 de la partie externe 2 est renforcée au moyen d'une bande à double face adhésive 4 disposée dans la zone plane de jonction entre les branches interne 51 et externe 52 de l'armature 5. La branche externe 52 comporte un prolongement 52a faisant saillie vers la feuillure F au niveau de la zone de jonction avec la branche interne 51. Le prolongement 52a assure la retenue transversale de la bande 4 et l'extrémité interne 21 en cas de glissement de ces dernières vers l'extérieur.

Bien entendu, il est aussi possible de prévoir, (dans un mode de réalisation non représenté) que la bande adhésive 4 vienne compléter le verrouillage sous tension de l'extrémité interne 21 illustré sur la figure 3.

## Revendications

1. Joint d'étanchéité pour vitre coulissante (V) de véhicule constitué notamment d'un profilé comprenant une partie interne (1) pourvue d'un élément (11) de section en U pour la fixation sur la feuillure (F) de carrosserie et d'une partie externe (2) pourvue d'un élément d'étanchéité (22) destiné à être au contact de la face extérieure de la vitre (V), caractérisé en ce que lesdites parties interne (1) et externe (2) sont réunies par un bras de liaison articulé (3) dont les tronçons rigides de rattachement (31,32) définissent avec l'élément de fixation (11) et l'élément d'étanchéité (22) des logements d'ancrage (41,42) adaptés aux extrémités d'une armature externe amovible (5) de section en U.

2. Joint selon la revendication 1, caractérisé en ce que ladite armature externe amovible (5) comporte une dent (53) obturant partiellement une gorge (54) dans laquelle est verrouillée sous tension l'extrémité interne (21) de la partie externe (2) de façon à emprisonner ladite armature (5) et à refermer le bras de liaison (3) autour du bord périphérique de la vitre (V).

3. Joint selon la revendication 1 ou 2, caractérisé en ce que la liaison entre l'extrémité interne (21) de la partie externe (2) et l'armature (5) est renforcée au moyen d'une bande à double face adhésive (4).

4. Joint selon l'une des revendications précédentes, caractérisé en ce que ladite armature externe amovible (5) comporte une potence d'accrochage (50) sur l'élément de fixation (11) en U.

5. Joint selon l'une des revendications précédentes, caractérisé en ce que l'articulation (33) dudit bras de liaison (3) est constituée d'un segment élastiquement déformable, réalisé à la jonction entre les tronçons rigides de rattachement (31,32).

6. Joint selon l'une des revendications précédentes, caractérisé en ce que le tronçon de rattachement (31) du bras de liaison (3) avec la partie interne (1) est constitué d'une portion (31a) sensiblement parallèle à la branche extérieure (11a) de l'élément de fixation (11) en U se prolongeant vers l'articulation (33) par un coude (31b) d'environ 90° puis par une portion rectiligne (31c).

7. Joint selon l'une des revendications précédentes, caractérisé en ce que le tronçon de rattachement (32) avec la partie externe (2) est constitué d'une portion rectiligne.

8. Joint selon l'une des revendications précédentes, caractérisé en ce que le tronçon de rattachement (31) du bras de liaison (3) avec la partie interne (1) comporte sur sa face intérieure au logement (41) correspondant des saignées longitudinales (35) destinées à recevoir des crans (55) ménagés sur l'armature externe (5).

9. Joint selon l'une des revendications précédentes, caractérisé en ce que le bras de liaison (3) comporte des bossages (34) de calage et de guidage du bord périphérique de la vitre (V).

10. Joint selon l'une des revendications précédentes, caractérisé en ce que l'extrémité interne (21) de la partie externe (2) est pourvue d'au moins une lèvre d'appui (23) sur la feuillure (F).

11. Joint selon l'une des revendications précédentes, caractérisé en ce que ledit tronçon de rattachement (32) du bras de liaison (3) avec la partie externe (2) se raccorde à la base d'une lèvre d'étanchéité (20) venant en contact de glissement avec la face extérieure de la vitre (V).

12. Joint selon l'une des revendications précédentes, caractérisé en ce que la partie interne (1) porte, sous le tronçon de rattachement (31) du bras de liaison (3) une lèvre d'étanchéité (10) en contact de glissement avec la face intérieure de la vitre (V).
